# EUROPÄISCHE PATENTANMELDUNG

(11) **EP 3 669 669 A1**
(43) Veröffentlichungstag der Anmeldung: **24.06.2020**
(21) Anmeldenummer: 18215259.5
(22) Anmeldetag: 21.12.2018
(51) Int. Cl.: A23L 27/24

(54) **WÜRZMISCHUNG UND IHRE HERSTELLUNG**

(71) Anmelder: BRAIN AG, 64673 Zwingenberg (DE)
(72) Erfinder: GAUERT, Marc, 68535 Edingen-Neckarhausen (DE); KELETY, Bela, 65931 Frankfurt am Main (DE)
(74) Vertreter: Daniels, Stefanie Lisa

(57) **Zusammenfassung**

Die vorliegende Erfindung betrifft eine Würzmischung, dadurch erhältlich, dass man
(a) lebende Pilzzellen einer Spezies der Unterabteilung der Ustilaginomycotina oder einer Spezies der Abteilung der Ascomycota in einem Fermentationsmedium bereitstellt;
(b) ein Lebensmittelnebenstrom als Substrat in das Fermentationsmedium zugibt;
(c) ein fermentiertes Substrat durch Inkubation der in Schritt (b) erhaltenen Mischung herstellt;
(d) die Würzmischung durch Abtrennung der Pilzzellen von dem im Schritt (c) erhaltenen fermentierten Substrat gewinnt; und
(e) optional die Würzmischung aus Schritt (d) trocknet.

## Beschreibung

### GEBIET DER ERFINDUNG

Die Erfindung befindet sich auf dem Gebiet von Würzmischungen und ihrer Herstellung mit Hilfe von Pilzzellen einer Spezies der Unterabteilung der Ustilaginomycotina.

### STAND DER TECHNIK

Der sinnvollen und ressourcenschonenden Nutzung von Rohstoffen kommt heutzutage eine immer größer werdende Bedeutung zu. So fallen bei der Herstellung von Lebensmitteln heutzutage sehr viele qualitativ hochwertige Produkte an, die ohne weitere Verarbeitung nicht direkt für die menschliche Ernährung verwendet werden können.

Ein Beispiel für die bislang fehlende Nachhaltigkeit der Lebensmittelindustrie stellen überwiegend pflanzliche Produkte dar. Diese werden oftmals nur dazu verwendet, einen bestimmten Stoff zu isolieren und diesen weiter zu verwerten. So werden, beispielsweise Karotten, industriell dazu verwendet, das darin enthaltene β-Carotin zu extrahieren. Die restlichen Bestandteile der Karotten werden als Lebensmittelnebenstrom oder Lebensmittelabfallprodukt deklariert und meistens entsorgt bzw. für die Tierfutterherstellung verwendet und dies obwohl Nebenprodukte der Obst- und Gemüseverarbeitung eine reiche Quelle bioaktiver Verbindungen, vor allem sekundärer Pflanzenstoffe und hochmolekularer Bestandteile der pflanzlichen Zellwand, darstellen.

Es war folglich Aufgabe der Erfindung ein Produkt, gewonnen aus Lebensmittelnebenströmen, sowie dessen Herstellungsverfahren bereitzustellen, welches sich ohne weiteres für die menschliche Ernährung eignet.

### BESCHREIBUNG DER ERFINDUNG

Diese Aufgabe wird vollumfänglich durch Anspruch 1 der vorliegenden Erfindung gelöst, welcher auf eine Würzmischung gerichtet ist, die dadurch erhältlich ist, dass man
(a) lebende Pilzzellen einer Spezies der Unterabteilung der Ustilaginomycotina oder einer Spezies der Abteilung der Ascomycota in einem Fermentationsmedium bereitstellt;
(b) ein Lebensmittelnebenstrom als Substrat in das Fermentationsmedium zugibt;
(c) ein fermentiertes Substrat durch Inkubation der in Schritt (b) erhaltenen Mischung herstellt;
(d) die Würzmischung durch Abtrennung der Pilzzellen von dem im Schritt (c) erhaltenen fermentierten Substrat gewinnt; und
(e) optional die Würzmischung aus Schritt (d) trocknet.

Überraschenderweise haben die Erfinder festgestellt, dass die erfindungsgemäße Würzmischung nicht nur eine äußerst angenehm geschmackliche Note aufweist und folglich ideal in der Lebensmittelindustrie verwendet werden kann sondern auch, dass die erfindungsgemäße Würzmischung einen deutlich reduzierten Zuckergehalt im Vergleich zum Lebensmittelnebenstrom als Ausgangssubstrat aufweist.

Die "Würzmischung" im Sinne der Erfindung ist das Endprodukt des Fermentationsprozesses mit lebenden Pilzzellen einer Spezies der Unterabteilung der Ustilaginomycotina oder mit lebenden Pilzzellen einer Spezies der Abteilung der Ascomycota. Die Würzmischung kann sowohl als flüssiges Konzentrat vorliegen oder pastös oder pulverförmig sein.

Ein "Lebensmittelnebenstrom" stellt im Sinne der Erfindung jegliches pflanzliches Material dar, welches zuvor bereits in der Lebensmittelindustrie bearbeitet wurde, um beispielsweise einen bestimmten Stoff zu gewinnen. Beispielsweise kann der Lebensmittelnebenstrom aus Pflanzenmaterial aus Früchten, Nüssen, Getreide oder Gemüse ausgewählt werden, einschließlich Kiwis, Äpfeln, Birnen, Orangen, Karotten, Mangos, Tomaten, Avocados, Beeren, Bohnen, Erbsen, Limette, Zitrone, Zwiebel, Pastinake, Rote Beete, Banane, Pfirsich, Nektarine, Ananas, Melone, Wassermelone, Eichel, Haselnuss, Kastanie, Kichererbse, Chia, Traube, Kartoffel, Kokosnuss, Mandelbohne und / oder Derivate davon, wie Häute, Schalen, Samen oder Wurzeln. Auch die Begriffe "Lebensmittelabfallstrom" oder "Lebensmittelabfallprodukt" können im Sinne der Erfindung synonym für Lebensmittelnebenstrom verwendet werden.

Es ist zu beachten, dass die Singularformen "ein", "eine" und "der", wie sie hier verwendet werden, mehrere Referenzen enthalten, sofern der Kontext nicht eindeutig etwas anderes angibt. So umfasst zum Beispiel die Bezugnahme auf "eine Zelle" eine oder mehrere solcher unterschiedlichen Zellen.

Wie hierin verwendet, wird unter dem konjunktiven Begriff "und / oder" zwischen mehreren aufgeführten Elementen sowohl individuelle als auch kombinierte Optionen verstanden. Wenn zum Beispiel zwei Elemente durch "und / oder" verbunden werden, bezieht sich eine erste Option auf die Anwendbarkeit des ersten Elements ohne das zweite. Eine zweite Option bezieht sich auf die Anwendbarkeit des zweiten Elements ohne das erste. Eine dritte Option bezieht sich auf die Anwendbarkeit des ersten und des zweiten Elements zusammen. Jede dieser Optionen wird als in die Bedeutung fallend verstanden und erfüllt daher die Anforderung des Ausdrucks "und / oder", wie er hier verwendet wird. Die gleichzeitige Anwendbarkeit von mehr als einer der Optionen wird auch als in die Bedeutung fallend verstanden und erfüllt daher die Anforderung des Ausdrucks "und / oder", wie er hier verwendet wird.

Das Wort "etwa", wie es hier verwendet wird, bezieht sich auf einen Wert, der innerhalb eines akzeptablen Fehlerbereichs für den bestimmten Wert liegt, wie er von einem Durchschnittsfachmann bestimmt wird, der teilweise davon abhängt, wie der Wert gemessen oder bestimmt wird, d.h. der Einschränkungen des Messsystems. Zum Beispiel kann "etwa" je nach Praxis im Stand derTechnik 1 oder mehr als 1 Standardabweichung bedeuten. Der Begriff "etwa" wird auch verwendet, um anzuzeigen, dass der fragliche Betrag oder Wert der angegebene Wert oder ein anderer Wert sein kann, der etwa gleich ist. Der Ausdruck soll vermitteln, dass ähnliche Werte gleichwertige Ergebnisse oder Effekte gemäß der Erfindung fördern. In diesem Zusammenhang kann sich "etwa" auf einen Bereich oberhalb und / oder unterhalb von bis zu 10% beziehen. Das Wort "etwa" bezieht sich in einigen Ausführungsformen auf einen Bereich oberhalb und unterhalb eines bestimmten Wertes, der bis zu 5% beträgt, wie beispielsweise bis zu 2%, bis zu 1% oder bis zu 0,5% über oder unter diesem Wert. In einer Ausführungsform bezieht sich "etwa" auf einen Bereich von bis zu 0,1% über und unter einem gegebenen Wert.

In einer bevorzugten Ausführungsform der Erfindung beträgt der Gehalt an Zucker der im Schritt (d) erhaltenen Würzmischung maximal 65% Brix oder 500 g/L Saccharose sowie 150 g/L Glucose oder Fructose (insgesamt also 650 g/L Zucker). Als "Zucker" wird im Sinne der Erfindung Saccharose, sowie Fructose und Glucose verstanden. %Brix ist eine Maßeinheit der relativen Dichte von Flüssigkeiten und wird vorwiegend in der Obstindustrie verwendet, da die Dichte hier meist dem Zuckergehalt gleichzusetzen ist.

In einer weiter bevorzugten Ausführungsform der Erfindung kann die Würzmischung Carbonsäuren enthalten, wobei der Gehalt an Carbonsäuren mindestens 3 g/L beträgt, jedoch 100 g/L nicht überschreitet. In einer besonders bevorzugten Ausführungsform der Erfindung werden die Carbonsäuren ausgewählt aus der Gruppe bestehend aus Äpfelsäure (E 296) und Bernsteinsäure (E 363). Diese beiden Carbonsäuren werden generell als Lebensmittelzusatzstoffe verwendet. So hat die Äpfelsäure beispielsweise einen säuerlichen Geschmack, der langanhaltender ist, als der säuerliche Geschmack der Citronensäure (E 330). Die Bernsteinsäure weist einen mild sauren und zugleich leicht salzigen Geschmack auf und wird vor allem als Geschmackverstärker für Desserts oder Lebensmittel in Pulverform eingesetzt.

Folglich ist die erfindungsgemäße Würzmischung, die über die Fermentation von Lebensmittelnebenströmen mit Hilfe von aktiven Pilzzellen einer Spezies der Unterabteilung der Ustilaginomycotina oder einer Spezies der Abteilung der Ascomycota hergestellt wird eine nachhaltige Lösung zur Weiterverwertung von Lebensmittelnebenströmen, da sie aufgrund ihres geringen Zuckergehaltes und den enthaltenen Carbonsäuren, bevorzugt Äpfelsäure und Bernsteinsäure, von der Lebensmittelindustrie verwendet werden und folglich in diversen Lebensmittelprodukten enthalten sein kann.

Eine weitere Ausführungsform der Erfindung betrifft ein Verfahren zur Herstellung einer Würzmischung aus einem Lebensmittelnebenstrom umfassend die folgenden Schritte:
(a) Bereitstellung lebender Pilzzellen einer Spezies der der Unterabteilung der Ustilaginomycotina oder einer Spezies der Abteilung der Ascomycota in einem Fermentationsmedium;
(b) Zugabe eines Lebensmittelnebenstroms als Substrat in das Fermentationsmedium;
(c) Herstellung eines fermentierten Substrates durch Inkubation der in Schritt (b) erhaltenen Mischung;
(d) Gewinnung der Würzmischung durch Abtrennung der Pilzzellen von dem im Schritt (c) erhaltenen fermentierten Substrat; und
(e) optional Trocknung der Würzmischung aus Schritt (d).

In einer bevorzugten Ausführungsform der Erfindung werden als Lebensmittelnebenströme Extrakte oder Trester aus Äpfeln, Karotten, Weintrauben und/oder Tomaten verwendet. In einer besonders bevorzugten Ausführungsform der Erfindung wird als Lebensmittelnebenstrom Karottenextrakt oder Traubentrester verwendet.

In einer bevorzugten Ausführungsform der Erfindung gehören die lebenden Pilzzellen einer Spezies der Unterabteilung der Ustilaginomycotina zu der Familie der Ustilaginacea. In einer besonders bevorzugten Ausführungsform der Erfindung handelt es sich um lebende Pilzzellen der Gattung Ustilago. In einer weiter besonders bevorzugten Ausführungsform der Erfindung handelt es sich bei den lebenden Pilzzellen um Zellen von *Ustilago maydis.*

In einer weiteren bevorzugten Ausführungsform der Erfindung gehören die lebenden Pilzzellen einer Spezies der Abteilung der Ascomycota (Schlauchpilze) der Klasse der Saccharomycetes an. In einer weiter bevorzugten Ausführungsform der Erfindung handelt es sich bei den verwendeten lebenden Pilzzellen um Zellen einer Spezies der Saccharomycetales (Echte Hefen). In einer Ausführungsform der Erfindung beträgt die Inkubationsdauer des Schritts (c) mindestens 40 Stunden. In einer bevorzugten Ausführungsform der Erfindung beträgt die Inkubationsdauer des Schritts (c) mindestens 53 Stunden. In einer weiter bevorzugten Ausführungsform der Erfindung beträgt die Inkubationsdauer des Schritts (c) mindestens 75 Stunden. In einer meist bevorzugten Ausführungsform der Erfindung beträgt die Inkubationsdauer des Schritts (c) mindestens 141 Stunden.

Wie bereits oben beschrieben, kann die Würzmischung sowohl als flüssiges Konzentrat vorliegen oder pastös oder pulverförmig sein. Soll die Würzmischung in Pulverform vorliegen so versteht sich von selbst, dass der Trocknungsschritt (e) in diesem Falle fakultativ ist.

Die Abtrennung der Pilzzellen in Schritt (d) erfolgt in einer Ausführungsform der Erfindung über einen Zentrifugations- oder alternativ über einen Filtrationsschritt. Hierbei kommen alle denkbaren Verfahren in Betracht, die dem Fachmann geläufig sind.

Wie bereits oben erwähnt, erhält die durch das erfindungsgemäße Verfahren hergestellte Würzmischung in einer Ausführungsform Carbonsäuren. In einer weiter bevorzugten Ausführungsform der Erfindung enthält diese Gewürzmischung Dicarbonsäuren. In einer besonders bevorzugten Ausführungsform der Erfindung werden die Dicarbonsäuren ausgewählt aus der Gruppe bestehend aus Äpfelsäure (E 296) und Bernsteinsäure (E 363).

In einer weiter bevorzugten Ausführungsform der Erfindung beträgt die Raum-Zeit-Ausbeute in Bezug auf die in der Würzmischung enthaltenen Carbonsäuren mindestens 0,5 g/L/h. In einer weiter bevorzugten Ausführungsform der Erfindung beträgt die Raum-Zeit-Ausbeute in Bezug auf die in der Würzmischung enthaltenen Carbonsäuren mindestens 1 g/L/h.

In einer bevorzugten Ausführungsform der Erfindung ist der Zuckergehalt der in Schritt (d) erhaltenen Würzmischung im Vergleich zum Lebensmittelnebenstrom um mindestens 50 % reduziert. In einer weiter bevorzugten Ausführungsform der Erfindung ist der Zuckergehalt der in Schritt (d) erhaltenen Würzmischung im Vergleich zum Lebensmittelnebenstrom um mindestens 60 % reduziert. In einer weiter bevorzugten Ausführungsform der Erfindung ist der Zuckergehalt der in Schritt (d) erhaltenen Würzmischung im Vergleich zum Lebensmittelnebenstrom um mindestens 70 % reduziert. In einer besonders bevorzugten Ausführungsform der Erfindung ist der Zuckergehalt der in Schritt (d) erhaltenen Würzmischung im Vergleich zum Lebensmittelnebenstrom um mindestens 80 % reduziert.

Weiterhin weist die in Schritt (d) erhaltene Würzmischung in einer Ausführungsform einen angenehmen, leicht sauren sowie vollmundigen Geschmack auf.

Die Pilzzellen der vorliegenden Erfindung können für mehrere Generationen in einem Kulturmedium kultiviert worden sein. Für die Anwendung im erfindungsgemäßen Verfahren werden die Pilzzellen auf einen OD600-Wert von etwa 1,5 bis etwa 2,5 vermehrt, und dann für die Lagerung bei -20°C bis -196°C etwa 1:2 bis etwa 1:100000, bevorzugter etwa 1:1 verdünnt. Für eine Lagerung der Pilzzellen eignet sich beispielsweise eine Verdünnung mit Glycerin.

In einer bevorzugten Ausführungsform der Erfindung werden die gelagerten Pilzzellen für die Kultivierung auf Substrat in einer Vorkultur vorinkubiert. Hierzu erfolgt die Inokulation mit den gelagerten Pilzzellen in einem Verhältnis von 1:20 bis 1:100. Die Vorkultivierung erfolgt für 10-25 h bei 25-37°C unter Schütteln vorzugsweise in einem Glaskolben mit 100-500 Umdrehungen pro Minute und 1 bis 3 cm Auslenkung bis zum Erreichen eines OD600-Werts von etwa 1,5 bis 2,5.Die vorkultivierten Pilzzellen der vorliegenden Erfindung können für die Kultivierung auf Substrat in einer Hauptkultur wie in Schritt c) oben beschrieben inkubiert werden. Hierzu erfolgt die Inokulation aus der Vorkultur in einem Verhältnis von 1:10 bis 1:100. Bei der Hauptkultur werden OD600-Werte von etwa 100 bis etwa 200 erreicht.Eine weitere Ausführungsform der Erfindung betrifft die Verwendung der erfindungsgemäßen Würzmischung oder einer Würzmischung, die durch das erfindungsgemäße Verfahren hergestellt wurde in Lebensmittelprodukten.

### BEISPIELE

### Beispiel 1: Anzucht von Ustilago maydis

Die Anzucht von *Ustilago maydis* (z.B. zu beziehen über ATCC, Nr. 22892) erfolgt als Vorkultur in 50 mL Vorkulturmedium in einem 500 mL Kolben ohne Schikane.

Zusammensetzung des Vorkultur-Mediums: 50 g/L Glukose, 1,6 g/L NH₄Cl, 0,5 g/L KH₂PO₄, 0,2 g/L MgSO₄ · 7 H₂O, 0,01 g/L FeSO₄ · 7 H₂O, 19,5 g/L MES (pH 6,5), 0,05 mg/L Biotin, 1 mg/L Calcium-D(+)-pantothenate, 1 mg/L Nicotinic acid, 25 mg/L myo-Inositol, 1 mg/LThiamine HCl, 1 mg/L Pyridoxine HCl, 0,2 mg/L 4-Aminobenzoic acid, 15 mg/L EDTA, 4,5 mg/L ZnSO₄ · 7 H₂O, 1,03 mg/L MnCl₂ · 4 H₂O, 0,3 mg/L CoCl₂ · 6 H₂O, 0,3 mg/L CuSO₄ · 5 H₂O, 0,4 mg/L Na₂MoO₄ · 2 H₂O, 4,5 mg/L CaCl₂ · 2 H₂O, 3 mg/L FeSO₄ · 7 H₂O, 1 mg/L H₃BO₃, 0,1 mg/L KI

Zum Animpfen werden 1,1 mL einer Kryokonserve steril in das Vorkulturmedium überführt. Die Kultivierung erfolgt für ca. 18 h bei 30°C, 250 rpm, 2,5cm Auslenkung auf eine OD₆₀₀ von ca. 2-3. Die Kryokonserve ist eine Kultivierung unter oben beschriebenen Bedingungen, die bei Erreichen einer OD₆₀₀ von 2 portioniert wird. Dazu werden je 600 µL Kultur mit 600 µL 30% Glycerin gemischt und bei -80°C gelagert.

### Beispiel 2: Fermentation eines Karottenextrakts

Für die Fermentation eines Karottenextrakts mit *Ustilago maydis* wird der Mikroorganismus in Fermentationsmedium überführt.

Zusammensetzung des Fermentationsmediums: 150 g/L Glukose, 8 g/L NH₄Cl, 1 g/L KH₂PO₄, 0,4 g/L MgSO₄· 7H₂O, 0,02 g/L FeSO₄ · 7H₂O, 0,1 mg/L Biotin, 2 mg/L Calcium-D(+)-pantothenate, 2 mg/L Nicotinic acid, 50 mg/L myo-Inositol, 2 mg/L Thiamine HCl, 2 mg/L Pyridoxine HCl, 0,4 mg/L 4-Aminobenzoic acid, 30 mg/L EDTA, 9 mg/L ZnSO₄ · 7 H₂O, 2,06 mg/L MnCl₂ · 4 H₂O, 0,6 mg/L CoCl₂ · 6 H₂O, 0,6 mg/L CuSO₄ · 5 H₂O, 0,8 mg/L Na₂MoO₄ · 2 H₂O, 9 mg/L CaCl₂ · 2 H₂O, 6 mg/L FeSO₄ · 7 H₂O, 2 mg/L H₃BO₃, 0,2 mg/L KI

Fermentationsbedingungen: Das Beimpfen erfolgt mit der vollständigen Vorkultur mit einer Start-OD₆₀₀ von ca. 0,2 in einem 1,5 Liter Fermenter mit 1 L Arbeitsvolumen bei 28°C, 30% pO₂, pH 6,5 (10 M NaOH als Stellmittel zur Titration). Die Fütterung mit 90% (w/w) Karottenextrakt und 10% (w/w) Wasser beginnt 10 h nach Erreichen einer Gelöstsauerstoffkonzentration (pO₂) von 30 %. Die Fütterung erfolgt konstant mit 8 g/h/L Arbeitsvolumen.

Der Karottenextrakt aus einem industriellen Nebenstrom (GNT Europa GmbH, 52072 Aachen) enthält ca. 395 g/L Saccharose und 144 g/L Gesamtzucker (Glukose und Fruktose) sowie 65,4 g/L Äpfelsäure.

Der verwendete Mikroorganismus wächst bis zu einer OD₆₀₀ von ca. 150. Abzüglich der zugefütterten Äpfelsäure werden in 141 h Fermentationsdauer 80 g Äpfelsäure und 11,6 g Bernsteinsäure produziert. Bei höheren Fütterungsraten sind höhere Produktbildungsraten möglich. Es wurde eine Raum-Zeit-Ausbeute von 1,1 g/L/h erreicht.

### Beispiel 3: Verkostung des fermentierten Karottenextrakts

Zu unterschiedlichen Zeitpunkten wurden Überstandsproben nach Abtrennung des Mikroorganismus durch Zentrifugation verkostet. Die letzte Probe wurde nach 141 h Fermentationsdauer entnommen. Die Proben werden jeweils mit HCl auf pH 3 titriert und 1:5 verdünnt. Die Probe nach 141 Stunden Fermentation enthielt 17,8 g/L Äpfelsäure und 2 g/L Bernsteinsäure.

Das Geschmacksprofil des Karottenextrakts veränderte sich im Verlauf der Fermentation wie in der folgenden Tabelle beschrieben. Die Verkostung erfolgte durch ein Panel von mehreren Probanden, welche die Proben nach Geschmack, Geruch und optischen Eindruck beurteilten.

| Ausgangsprobe (Karottenextrakt 1:50 in Wasser verdünnt) | bitterer, extrem starker Karottengeschmack, optisch wenig ansprechend (braun, trüb) |
|---|---|
| Fermentation 0 h (1:15 in Wasser verdünnt) | salziger Geschmack |
| Fermentation 53 h (1:15 in Wasser verdünnt) | salzig, würziger, leicht saurer Geschmack |
| Fermentation 75 h (1:15 in Wasser verdünnt) | leicht saurer Geschmack |
| Fermentation 141 h (1:5 in Wasser verdünnt) | angenehmer leichter saurer, vollmundiger Geschmack; Karottengeschmack nicht mehr unangenehm dominant; optisch ansprechend (orange) |

## Patentansprüche

1. Würzmischung, dadurch erhältlich, dass man
(a) lebende Pilzzellen einer Spezies der Unterabteilung der Ustilaginomycotina oder einer Spezies der Abteilung der Ascomycota in einem Fermentationsmedium bereitstellt;
(b) ein Lebensmittelnebenstrom als Substrat in das Fermentationsmedium zugibt;
(c) ein fermentiertes Substrat durch Inkubation der in Schritt (b) erhaltenen Mischung herstellt;
(d) die Würzmischung durch Abtrennung der Pilzzellen von dem im Schritt (c) erhaltenen fermentierten Substrat gewinnt; und
(e) optional die Würzmischung aus Schritt (d) trocknet.

2. Würzmischung nach Anspruch 1, wobei der Gehalt an Zucker der im Schritt (d) erhaltenen Würzmischung maximal 65% Brix bzw. 500 g/L Saccharose sowie 150 g/L Glucose oder Fructose beträgt.

3. Würzmischung nach Anspruch 1 und/oder 2, wobei die in Schritt (d) erhaltene Würzmischung Carbonsäuren enthält und der Gehalt an Carbonsäuren mindestens 3 g/L beträgt, jedoch 100 g/L nicht überschreitet.

4. Würzmischung nach Anspruch 3, wobei die Carbonsäuren ausgewählt sind aus der Gruppe bestehend aus Äpfelsäure und Bernsteinsäure.

5. Verfahren zur Herstellung einer Würzmischung aus einem Lebensmittelnebenstrom umfassend die folgenden Schritte:
(a) Bereitstellung lebender Pilzzellen einer Spezies der Unterabteilung der Ustilaginomycotina oder einer Spezies der Abteilung der Ascomycota in einem Fermentationsmedium;
(b) Zugabe eines Lebensmittelnebenstroms als Substrat in das Fermentationsmedium;
(c) Herstellung eines fermentierten Substrates durch Inkubation der in Schritt (b) erhaltenen Mischung;
(d) Gewinnung der Würzmischung durch Abtrennung der Pilzzellen von dem im Schritt (c) erhaltenen fermentierten Substrat; und
(e) optional Trocknung der Würzmischung aus Schritt d.

6. Verfahren nach Anspruch 5, wobei als Lebensmittelnebenströme Karottenextrakt und/oder Trester verwendet werden.

7. Verfahren nach mindestens einem der Ansprüche 5 und/oder 6, wobei die Inkubationsdauer des Schritts (c) mindestens 40 Stunden beträgt.

8. Verfahren nach mindestens einem der Ansprüche 5 bis 7, wobei die Abtrennung des Brandpilzes in Schritt (d) über einen Zentrifugations- oder Filtrationsschritt erfolgt.

9. Verfahren nach mindestens einem der Ansprüche 5 bis 8, wobei die in Schritt (d) erhaltene Würzmischung Carbonsäuren enthält.

10. Verfahren nach Anspruch 9, wobei die Carbonsäuren ausgewählt sind aus der Gruppe bestehend aus Äpfelsäure und Bernsteinsäure.

11. Verfahren nach mindestens einem der Ansprüche 9 und/oder 10, wobei die Raum-Zeit-Ausbeute in Bezug auf die in der Würzmischung enthaltenen Carbonsäuren mindestens 0,5 g/L/h beträgt.

12. Verfahren nach mindestens einem der Ansprüche 5 bis 11, wobei der Zuckergehalt der in Schritt (d) erhaltenen Würzmischung im Vergleich zum Lebensmittelnebenstrom um mindestens 50 % reduziert wird.

13. Verfahren nach mindestens einem der Ansprüche 5 bis 12, wobei die in Schritt (d) erhaltene Würzmischung einen angenehmen, leicht sauren sowie vollmundigen Geschmack aufweist.

14. Verfahren nach mindestens einem der Ansprüche 5 bis 13, wobei die Spezies der Unterabteilung der Ustilaginomycotina *Ustilago maydis* ist.

15. Verwendung einer Würzmischung gemäß den Ansprüchen 1 bis 4 oder hergestellt durch ein Verfahren gemäß den Ansprüchen 5 bis 14 in Lebensmittelprodukten.
